# EUROPÄISCHE PATENTSCHRIFT

(11) **EP 2 565 699 B1**
(45) Veröffentlichungstag und Bekanntmachung des Hinweises auf die Patenterteilung: **10.09.2014**
(21) Anmeldenummer: 12177000.2
(22) Anmeldetag: 19.07.2012
(51) Int. Cl.: G02B 26/10, G01S 17/42, G01S 17/89, G01S 17/93, G01S 7/481, G01S 7/497

(54) **Optoelektronischer Sensor und Verfahren zur Erfassung von Objekten in einem Überwachungsbereich**
Optoelectronic sensor and method for detecting objects in a surveillance area
Capteur optoélectronique et un procédé pour détecter des objets dans une zone de surveillance

(30) Priorität: 02.09.2011 DE 102011053212
(43) Veröffentlichungstag der Anmeldung: 06.03.2013
(73) Patentinhaber: SICK AG, 79183 Waldkirch (DE)
(72) Erfinder: Möhrle, Manuel, 79183 Waldkirch (DE)
(74) Vertreter: Hehl, Ulrich

(56) Entgegenhaltungen:
- EP-A1- 0 214 799
- EP-A1- 0 532 976
- EP-A1- 2 189 814
- WO-A1-2005/076036
- US-A1- 2010 256 940

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 11.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird. Mit den Winkel- und Entfernungsangaben ist der Ort eines Objektes in dem Überwachungsbereich in zweidimensionalen Polarkoordinaten erfasst.

Neben Messanwendungen, bei denen Objektpositionen oder Objektkonturen erfasst werden, setzt man Laserscanner auch in der Sicherheitstechnik zur Überwachung einer Gefahrenquelle ein, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Eine besondere Anforderung wird in sicherheitstechnischen Anwendungen gestellt, bei denen der Laserscanner bewegt wird. Das geschieht beispielsweise bei der Absicherung von Fahrzeugen, besonders von autonomen Fahrzeugen (Führerlose Transportsysteme, AGV, AGC). Der Laserscanner sorgt beispielsweise dafür, dass das Fahrzeug nicht mit Objekten oder Personen kollidiert, indem Schutzfelder vor allem in Fahrrichtung, aber auch seitlich und unter Umständen sogar rückwärtig, auf Eingriffe überwacht werden.

Die definierte Objektauflösung in den Schutzfeldern ist auch unter Einfluss von Bewegungen zu gewährleisten. Die durch die Drehbewegung der Ablenkeinheit vorgegebene Winkelauflösung überlagert sich hier mit der äußeren Bewegung. Mögliche Beeinträchtigungen der Winkelauflösung treten besonders bei ruckartigen Drehbewegungen mit Ursprung nahe der Drehachse der Ablenkeinheit auf. Solche Bewegungen kommen beispielsweise bei Transportsystemen mit omnidirektionalem Antrieb vor, bei denen spezielle Radkonstruktionen die Möglichkeit schaffen, auf der Stelle zu drehen und sich aus der Istbewegung in jede Richtung bewegen zu können.

Ein Sicherheitslaserscanner muss erkennen, wenn wegen solcher Einflüsse die Objektauflösung beeinträchtigt ist, und rechtzeitig ein Abschaltsignal ausgeben. Dazu wird herkömmlich direkt die Drehbewegung der Ablenkeinheit mit einem Winkelencoder überwacht. Bei höherer Drehgeschwindigkeit sinkt unter sonst gleichen Voraussetzungen die Winkelauflösung. Wird dabei eine vorgehaltene Reserve überschritten, führt dies zur Abschaltung. Das ist aber ein indirektes und ungenaues Vorgehen, um den Einfluss von äußeren Bewegungen abzufangen. Oftmals führt bereits eine kurze, ruckartige Bewegung des Laserscanners zu einer Abschaltung, ohne dass sich die Objektauflösung überhaupt sicherheitsrelevant verschlechtert hat. Damit wird die Verfügbarkeit des Systems unnötig eingeschränkt.

In der DE 10 2006 008 275 wird ein Verfahren zur Detektion von Objekten mit einer schwenkbaren Sensoreinrichtung offenbart. Dabei navigiert ein Roboter, indem ein Laserscanner aus Entfernungsmessungen ihm bekannte Objekte erfasst und hieraus anhand einer gespeicherten Karte seine eigene Position ermittelt. Das Verfahren wird vorgeschlagen, weil eine Navigation mittels Odometrie und Gyroskopie allein zu ungenau und deshalb nicht möglich ist.

Die EP 1 348 983 B1 beschreibt einen optoelektronischen Sensor mit Positionsmessvorrichtung. Ein Ausführungsbeispiel betrifft einen Laserscanner für Volumenmessungen von Objekten. Die Positionsmessvorrichtung dient dazu, dass der Sensor aufgrund der erfassten Raumposition beziehungsweise Winkellager leichter oder sogar automatisch konfiguriert werden kann. Als Beispiele für Elemente der Positionsmessvorrichtung sind unter anderem ein GPS-Empfänger und ein Kreiselsensor genannt.

Aus der DE 10 2007 013 714 A1 ist bekannt, einen Objektabstand durch statistische Auswertung einer Vielzahl von Einzelpulsen zu ermitteln. Einflüsse durch Eigenbewegung des Sensors werden dabei nicht diskutiert

Aus der US 2010/0256940 A1 ist ein Laserscanner bekannt, der eine Intensitätsschwelle mit Hilfe eines Kalibrationsziels einstellt. Die Position und Orientierung des Laserscanners kann durch GPS beziehungsweise ein Inertialmesssystem bestimmt werden, um dreidimensionale Daten in Absolutkoordinaten zu erfassen.

Die EP 0 532 976 A1 beschreibt eine Einrichtung zum Objektschutz, bei der eine Laserüberwachungseinrichtung auf einer drehbaren Plattform montiert ist. Um den Raumbezug herzustellen, weist die Plattform Trägheitssensoren wie Kurskreisel, Kreiselbeschleunigungsmesser und Lagemessgeber auf. Werden Unregelmäßigkeiten wie Körperbewegungen oder ungewöhnliche Konturen erkannt, so wird ein Alarm ausgegeben oder die Laserleistung erhöht, um als Bekämpfungs- oder Enttarnungseinrichtung eine erfasste Person zu blenden.

Die WO 2005/076036 A1 befasst sich mit einem Laserbilderfassungssystem, das ein Ziel in einem matrixartigen Raster abscannt und dabei die jeweilige Abtastrichtung gegen Vibrationen stabilisiert. Zu diesem Zweck ist eine kardanische Aufhängung vorgesehen, die zugleich eine schrittweise Abstastbewegung und eine Kompensationsbewegung ausführen kann.

In der EP 2 189 814 A1 ist ein optoelektronischer Sensor offenbart, der einen Entfernungswert durch statistische Auswertung einer Vielzahl von Einzelmessungen bestimmt. Dabei werden Sendepulse mit Hilfe einer Regelung gezielt gerade so verzögert, dass die zugehörigen Empfangspulse zu einem zuvor festgelegten Beobachtungszeitpunkt registriert werden.

Es ist daher Aufgabe der Erfindung, die Sensorfunktion unter Einfluss von Bewegungen, vor allem von Drehbewegungen, zu verbessern.

Diese Aufgabe wird durch einen optoelektronischen Sensor und ein Verfahren zur Erfassung von Objekten in einem Überwachungsbereich gemäß Anspruch 1 beziehungsweise 11 gelöst. Dabei geht die Erfindung von dem Grundgedanken aus, in einem gattungsgemäßen optoelektronischen Sensor nicht nur die Winkelposition der Abtasteinheit relativ zum Sensor, also in intrinsischen Koordinaten, sondern zusätzlich auch die absolute Orientierung des Sensors selbst quasi in Weltkoordinaten zu bestimmen. Dazu wird ein Drehratensensor eingesetzt, wobei dies als Oberbegriff für jegliche beispielsweise mechanischen oder interferometrischen Sensoren aufzufassen ist, welche eine Orientierung messen können, beispielsweise Gyroskope, Faserkreisel und dergleichen. Mit Hilfe des Drehratensensors werden die Auswirkungen der Eigenbewegung des Sensors auf die tatsächlichen Winkel gemessen, unter denen Licht ausgesandt und empfangen wird.

Maßgeblich ist dabei meist nur eine Achse, nämlich die Drehachse der Ablenkeinheit. Deshalb wird entweder der Drehratensensor entsprechend orientiert, oder dessen Messwerte werden auf die interessierende Drehachse umgerechnet. Auf dieser Basis kann dann der Einfluss der Sensorbewegung auf die Winkelauflösung kompensiert werden. Dabei kommt es nicht auf die absolute Orientierungsinformation an, die ein Gyroskop liefern kann, sondern auf effektive Änderungen der Drehrate aufgrund der Eigenbewegung des Sensors. Die Kompensation kann rechnerisch erfolgen, indem die Kenntnis der Abweichung zwischen der durch Drehung der Ablenkeinheit angestrebten Winkelauflösung und der tatsächlichen, aufgrund der Überlagerung mit der Eigenbewegung des Sensors entstehenden Winkelauflösung bestimmt wird und dann die Messwerte diesen tatsächlichen Winkeln zugeordnet werden. Zugleich oder alternativ kann aber auch schon die Messaufnahme selbst korrigiert werden, indem eine Korrektureinheit kompensatorisch auf die Bewegung der Ablenkeinheit einwirkt.

Die Erfindung hat den Vorteil, dass an sich unnötige Abschaltungen vermieden werden und damit die Verfügbarkeit des Sensors erhöht wird. Wegen der Kompensation der Eigenbewegung des Sensors wird eine definierte Objektauflösung sichergestellt. Der Sensor wird robuster gegenüber Störeinflüssen und liefert dann weiterhin zuverlässige Messwerte.

Die Korrektureinheit ist bevorzugt dafür ausgebildet, die Drehbewegung der Ablenkeinheit zu beschleunigen oder zu verlangsamen. Damit kann dafür gesorgt werden, dass trotz der Eigenbewegung des Sensors die Winkelschritte zwischen zwei Messungen unterhalb einer geforderten Winkelauflösung oder sogar unverändert bleiben. Speziell kann die Beschleunigung oder Verlangsamung gerade in Gegenrichtung der Orientierungsänderungen und in einem Maße entsprechend der Orientierungsänderungen erfolgen. Damit wird effektiv die regelmäßige, zyklische Bewegung der Ablenkeinheit gegenüber dem Sensor mit der negativen Eigenbewegung des Laserscanner überlagert. Im Ergebnis verhält sich die Winkelabhängigkeit der Abtastung so, als ob der Sensor ruht. Dies lässt sich durch eine Regelung unterstützen, welche die Drehbewegung der Ablenkeinheit unter Berücksichtigung der Orientierungsänderungen stabilisiert.

Die Korrektureinheit ist bevorzugt dafür ausgebildet, aus der Winkelposition der Ablenkeinheit relativ zu dem Sensor und der Orientierung des Sensors relativ zu der Umgebung die Winkelposition der Ablenkeinheit relativ zu der Umgebung zu berechnen. Mit anderen Worten wird die Drehbewegung der Abtasteinheit auf ein absolutes Weltkoordinatensystem statt des mitbewegten Koordinatensystems bezogen, in dem die Winkelmesseinheit arbeitet. Damit wird eine Einschätzung ermöglicht, welche Auswirkungen die Eigenbewegung des Sensors auf die Winkelauflösung hat. Beispielsweise kann darauf die Entscheidung folgen, dass die derzeitige Eigenbewegung für die Sensorfunktion unkritisch ist.

Die Korrektureinheit ist bevorzugt dafür ausgebildet, die Zuordnung der Messwerte zu einer Richtung zu korrigieren, indem die Richtung aus der Winkelposition der Ablenkeinheit relativ zu der Umgebung bestimmt wird. Hier wird nicht mehr nur analysiert, welchen Einfluss die Eigenbewegung hat, sondern die Messwerte werden den tatsächlichen Richtungen bezogen auf die Umgebung zugeordnet, in welche der Sendelichtstrahl ausgesandt wurde. Damit werden Verzerrungen der Messwerte aufgrund von Eigenbewegungen korrigiert. Die ursprünglich bezogen auf den Sensor durch die Drehbewegung gewählten Winkelschritte werden dabei entsprechend der Eigenbewegung sowohl bei der tatsächlichen Messaufnahme als auch bei der Auswertung konsistent verändert.

Die Auswertungseinheit ist bevorzugt dafür ausgebildet, die Entfernung zu einem angetasteten Objekt aus der Lichtlaufzeit zwischen Aussenden des Sendelichtstrahls und Empfangen des remittierten Lichtstrahls zu bestimmen, so dass die Messwerte jeweils einen Objektabstand und eine Richtung umfassen. Der Laserscanner wird damit zu einem entfernungsmessenden Laserscanner, und jeder Messwert umfasst eine Richtung und einen Abstand, somit vollständige zweidimensionale Polarkoordinaten.

Der Sendelichtstrahl weist bevorzugt eine Vielzahl aufeinanderfolgender Einzellichtpulse auf, wobei die Auswertungseinheit dafür ausgebildet ist, jeweils für einen Messwert eine Gruppe von den ausgesandten Einzellichtpulsen entsprechenden Einzelempfangspulsen in einem zeitlichen Histogramm zu sammeln und aus dem Histogramm die Lichtlaufzeit vom Sensor zu einem Objekt und daraus den Objektabstand zu bestimmen. Der Laserscanner arbeitet demnach mit einem statistischen Verfahren, bei dem jedem Messwert nicht nur ein Sendepuls, sondern eine Vielzahl von Sendepulsen zugrunde liegt. Ein solches Mehrpulsverfahren hat einen deutlich größeren Eindeutigkeitsbereich und eine deutlich geringere Störanfälligkeit, weil durch die statistische Auswertung auch bei sehr ungünstigem Signal/Rauschverhältnis der Einzelmessung noch genaue Messungen möglich sind.

Die Auswertungseinheit ist bevorzugt dafür ausgebildet, die Richtung des Messwerts aus den Winkelpositionen der Ablenkeinheit bei Aussenden der Einzellichtpulse und/oder Empfangen der Einzelempfangspulse der in dem zugehörigen Histogramm gesammelten Gruppe zu bestimmen. Bei einem herkömmlichen pulsbasierten Laserscanner ist die Richtung des Messwerts durch einen einzigen Zeitpunkt festgelegt, zu dem der Puls ausgesandt wird. Wenn stattdessen erst eine Gruppe von Einzelpulsen gemeinsam einen Messwert liefert, muss dieser Gruppe eine gemeinsame Richtung zugewiesen werden, beispielsweise der Winkel, unter dem der erste, der letzte oder ein anderer Einzelpuls ausgesandt wurde, oder deren Mittelwert.

Die Auswertungseinheit ist bevorzugt dafür ausgebildet, die Gruppen derart zu wählen, dass die zu jeder Gruppe gehörigen Einzellichtpulse innerhalb eines einer vorgegebenen Winkelauflösung des Sensors entsprechenden Winkelsegments ausgesandt werden, wobei das Winkelsegment relativ zu der Umgebung bestimmt ist. Bei einer regelmäßigen Drehbewegung der Ablenkeinheit bietet es sich an, eine feste Anzahl von in gleichmäßigem Takt ausgesandten Einzelpulsen in einer Gruppe zusammenzufassen, um so regelmäßige Winkelschritte für die Messwerte zu erhalten. Wenn sich aber eine Eigenbewegung des Sensors überlagert, ist nicht mehr sichergestellt, dass die Gruppe der Einzelpulse auch genau innerhalb des angestrebten Winkelsegments ausgesandt wird. Dann hat man die Möglichkeit, die Gruppengröße zu variieren, so dass nicht mehr eine feste Anzahl von Einzelpulsen, sondern die Zuordnung zu einem Winkelsegment über die Gruppenzugehörigkeit entscheidet. Die Statistiktiefe, also die Anzahl von Einzelpulsen, die ein Histogramm bilden, und damit die Robustheit gegenüber Störungen werden dabei variiert. Dafür liefert ein solcher Sensor trotz Eigenbewegungen robust einen Messwert je angestrebtem Winkelsegment, so dass die Winkelauflösung unabhängig von Eigenbewegungen des Sensors wird.

Der Sensor ist bevorzugt als Sicherheitslaserscanner ausgebildet und weist eine Absicherungseinheit und einen sicheren Ausgang auf, wobei die Absicherungseinheit dafür ausgebildet ist, unzulässige Objekteingriffe in Schutzbereiche innerhalb des Überwachungsbereichs zu erkennen und daraufhin ein Absicherungssignal über den sicheren Ausgang auszugeben. Damit ist der Sensor für den Einsatz in der Sicherheitstechnik ausgerüstet.

Die Korrektureinheit oder die Absicherungseinheit ist bevorzugt dafür ausgebildet zu prüfen, ob die Messwerte nach Kompensation durch die Korrektureinheit eine ausreichende Winkelauflösung aufweisen, und andernfalls ein Abschaltsignal über den sicheren Ausgang auszugeben. In sicherheitstechnischen Anwendungen muss die fehlerfreie Funktion unter allen Umständen, also auch unter äußeren Einflüssen, wie einer Eigenbewegung, aufrecht erhalten bleiben. Der Sensor überprüft deshalb, ob die Kompensation erfolgreich war. Dabei wird beispielsweise geprüft, ob durch Änderung der Drehbewegung der Ablenkeinheit eine ausreichende Winkelauflösung erhalten werden konnte. Oder es wird geprüft, ob nach Neuzuordnung der Messwerte zu den tatsächlichen, durch die Eigenbewegung des Sensors veränderten Richtungen in einem Schutzfeld durch einen vergrößertem Winkelschritt eine Überwachungslücke entstanden ist, die sicherheitsrelevant ist. Anders als im Stand der Technik muss der Sensor nicht vorsichtshalber abschalten, sobald sich nur ganz allgemein die Drehbewegung der Ablenkeinheit um mehr als eine Reserve verändert. Vielmehr kann differenziert beurteilt werden, ob die Winkelauflösung noch hinreicht oder, wo dies nicht der Fall ist, die dadurch verschlechterte Messfunktion überhaupt zu einem sicherheitsrelevanten Problem führen kann. Das System schaltet daher seltener ab, und die Verfügbarkeit ist deutlich verbessert.

In vorteilhafter Weiterbildung ist ein Fahrzeug mit einem erfindungsgemäßen optoelektronischen Sensor und mit einer Navigationssteuerung vorgesehen, die dafür ausgebildet ist, die Bewegung des Fahrzeugs anhand der Messwerte zu verändern und insbesondere das Fahrzeug bei Empfang eines Absicherungssignals von dem Sensor zu stoppen oder zu verlangsamen. Bei mobilen Anwendungen sind die Probleme mit Störungen der Winkelauflösung durch Eigenbewegung des Sensors besonders präsent. Das gilt ganz besonders bei fahrerlosen Transportsystemen mit einem sogenannten omnidirektionalem Antrieb, also Fahrzeugen, die quasi auf der Stelle drehen können. Die Produktivität von Fahrzeugen oder fahrerlosen Transportsystemen wird wegen der selteneren Abschaltung erhöht.

Die Navigationssteuerung ist bevorzugt dafür ausgebildet, Bewegungen des Fahrzeugs zu verlangsamen oder zu stoppen, um sicherzustellen, dass die Korrektureinheit die Messwerte innerhalb einer geforderten Winkelauflösung kompensiert. Der Sensor erkennt hierbei, dass eine zu ruckartige oder allgemein zu schnelle Bewegung des Fahrzeugs zu einer Abschaltung führen wird. Bevor es deswegen zu einer Notabschaltung kommt, wird der Antrieb des Fahrzeugs abgeregelt, damit der Sensor die notwendige Messgenauigkeit und Winkelauflösung behält. Damit können in noch mehr Situationen Stillstände verhindert werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners; und
- Fig. 2: eine Draufsicht auf ein Fahrzeug mit darauf montierten Laserscannern gemäß Figur 1.

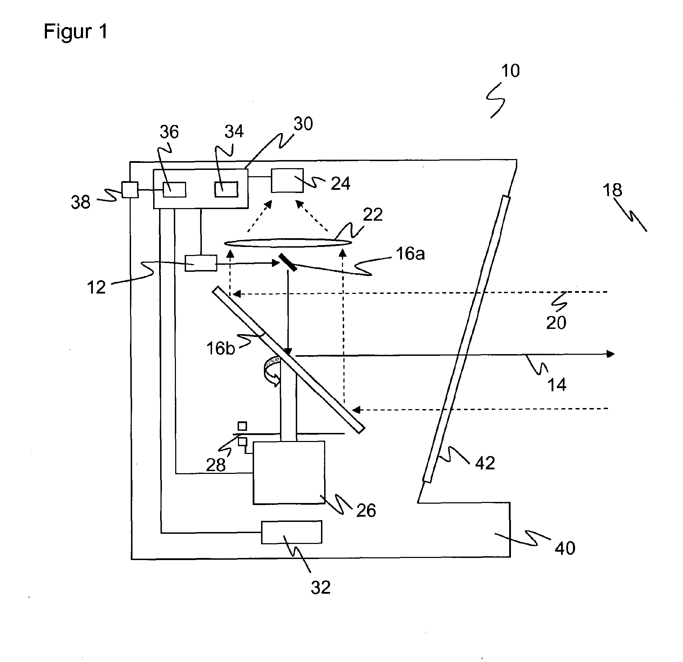

Figur 1 zeigt eine schematische Schnittdarstellung durch einen erfindungsgemäßen Laserscanner 10. Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst, der beispielsweise eine Codescheibe 28a umfasst, die von einer Gabellichtschranke 28b abgetastet wird. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Laserscanner 10 geschlossen. Diese Auswertung erfolgt in einer Auswertungseinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

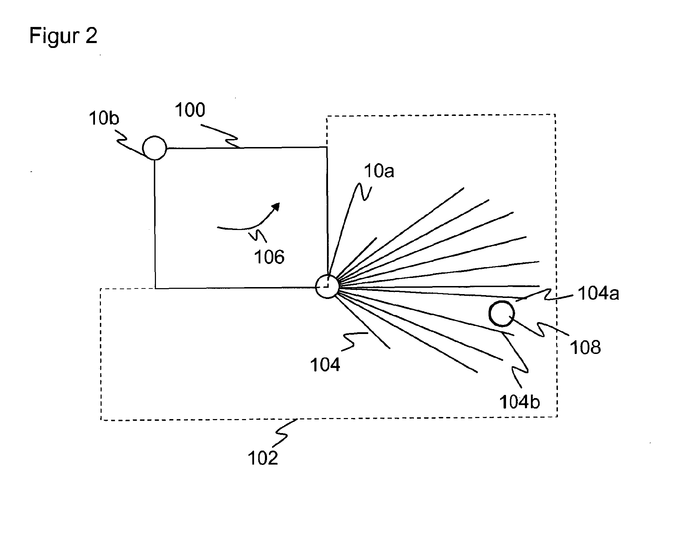

Wie weiter unten unter Bezugnahme auf die Figur 2 näher erläutert, kann die Winkelauflösung des Laserscanners 10 durch Eigenbewegungen, vor allem Eigendrehungen beeinflusst werden. Deshalb weist der Laserscanner 10 einen Drehratensensor 32 auf, beispielsweise basierend auf einem Gyro-Sensor, einem Faserkreisel oder einem anderen an sich bekannten Sensorprinzip. Der Drehratensensor 32 überwacht vorzugsweise die Orientierung des Laserscanners 10 nur in einer Achse, und zwar der Drehachse der Lichtablenkeinheit 16a-b. Alternativ werden die Informationen des Drehratensensors 32 auf diese Achse umgerechnet. Der Drehratensensor 32 liefert Informationen über die Drehrichtung und Drehgeschwindigkeit des Laserscanners 10. Diese Informationen werden in einer Korrektureinheit 34 weiterverarbeitet, um Veränderungen der Winkelauflösung des Laserscanners 10 zu bestimmen und zu kompensieren.

In einer sicherheitstechnischen Anwendung vergleicht eine Absicherungseinheit 36 die Position der erfassten Objekte mit einem oder mehreren Schutzfeldern, deren Geometrie in der Absicherungseinheit 36 durch entsprechende Parameter vorgegeben oder konfiguriert ist. Damit erkennt die Absicherungseinheit 36, ob ein Schutzfeld verletzt ist, also ob sich ein unzulässiges Objekt darin befindet, und schaltet je nach Ergebnis einen Sicherheitsausgang 38 (OSSD, Output Signal Switching Device). Dadurch wird beispielsweise ein Nothalt einer angeschlossenen und von dem Laserscanner 10 überwachten Maschine ausgelöst. Ein solcher Laserscanner wird durch Erfüllung der einleitend genannten Normen und die dafür erforderlichen Maßnahmen als Sicherheitslaserscanner ausgebildet.

Alle genannten Funktionskomponenten sind in einem Gehäuse 40 angeordnet, das im Bereich des Lichtaustritts und Lichteintritts eine Frontscheibe 42 aufweist. Die Funktionalität der Auswertungseinheit 30, der Korrektureinheit 34 und der Absicherungseinheit 36 kann alternativ auch ganz oder teilweise in einer übergeordneten Steuerung implementiert sein.

Figur 2 zeigt eine schematische Draufsicht auf ein Fahrzeug 100, dessen Navigation durch zwei Laserscanner 10a-b abgesichert wird. Der besseren Übersicht halber ist nur ein Schutzfeld 102 des einen Laserscanners 10a gezeigt. Weiterhin sind schematisch einzelne Abtastungen 104 des Laserscanners 10a eingezeichnet. Dabei wird der an sich regelmäßige Winkelabstand zwischen zwei Abtastungen 104 von beispielsweise 0,5° durch eine mit einem Pfeil 106 angedeutete Fahrtrichtungsänderung mit einer damit verbundenen Eigendrehung des Fahrzeugs 100 gestört, so dass einzelne Abtastungen 104a-b einen größeren Winkelschritt bilden. Die Objektauflösung wird auf diese Weise verschlechtert. Dadurch ist es möglich, dass ein Objekt 108, beispielsweise ein Bein einer vor dem Fahrzeug 100 befindlichen Person, nicht oder nicht mehr rechtzeitig erkannt wird. Die Sicherheitsfunktion des Laserscanners 10a ist gestört.

Die Korrektureinheit 34 nutzt nun die Orientierungsinformation des Drehratensensors 32, um zu beurteilen, ob eine Eigenbewegung des Laserscanners 10a dessen Funktion beeinträchtigt beziehungsweise um den Einfluss der Eigenbewegung auf die Messwerte zu kompensieren.

In einer Ausführungsform wird dazu durch Einwirkung auf die Motorsteuerung des Motors 26 die Drehbewegung der Lichtablenkeinheit 16a-b verändert. Beispielsweise wird die Drehgeschwindigkeit in einem Maße beschleunigt oder verlangsamt, welches die unerwünschte zusätzliche Drehung durch Eigenbewegung des Laserscanners 10b kompensiert. Als einfachster Ansatz wird die von dem Drehratensensor 32 ermittelte Drehrate von der Drehbewegung der Lichtablenkeinheit 16a-b abgezogen. Über die Drehrate des Laserscanners 10a gegenüber der Umgebung und die von dem Encoder 28 gemessene Winkelstellung der Lichtablenkeinheit 16a-b stehen aber auch alle Informationen bereit, um eine Regelung mit einem robusteren Verfahren zu implementieren, welches eine gewünschte Winkelauflösung sicherstellt.

In einer Ausführungsform werden die Winkelstellung der Lichtablenkeinheit 16a-b und die über die Drehrate bekannte überlagerte Orientierungsänderung des Laserscanners 10a gegenüber seiner Umgebung in der Korrektureinheit 34 miteinander verrechnet, um die tatsächliche Winkelauflösung, also die absolute Winkelauflösung gegenüber der Umgebung des Fahrzeugs 100 zu bestimmen. Danach lässt sich dann auch beurteilen, ob die Eigenbewegung des Laserscanners 10a für die Messwerte zumindest zu einem Zeitpunkt und für eine Winkelstellung kritisch war. Außerdem können die gemessenen Objektabstände den tatsächlichen, gegenüber der Umgebung bestimmten Winkeln zugewiesen werden. Die Messwerte werden so um die Einflüsse der Eigenbewegung des Laserscanners 10a bereinigt.

Die beiden in den letzten Absätzen beschriebenen Ausführungsformen sind auch miteinander kombinierbar. Dabei wird also die Aufnahme von Messwerten über den Winkelbereich vergleichmäßigt, indem kompensatorisch auf die Motorsteuerung des Motors 26 eingewirkt wird. Verbleibende Abweichungen von einer gewünschten Winkelauflösung werden dann rechnerisch erkannt beziehungsweise korrigiert.

Die Korrektureinheit 34, die Absicherungseinheit 36 oder eine übergeordnete Steuerung können dann in einer intelligenten Schutzfeldauswertung entscheiden, ob die Güte der so erhaltenen Messwerte ausreicht, um die geforderte Objektauflösung zumindest innerhalb der relevanten Schutzfelder zu gewährleisten. Erforderlichenfalls wird das Fahrzeug 100 dann abgeschaltet oder verlangsamt.

In einer Ausführungsform bestimmt die Auswertungseinheit 30 nicht die Lichtlaufzeit einzelner Lichtpulse, sondern ermittelt die Objektabstände mit einem Pulsmittelungsverfahren. Ein solches Pulsmittelungsverfahren ist beispielsweise in der eingangs genannten DE 10 2007 013 714 A1 beschrieben, auf die hier ergänzend verwiesen wird. Dabei wird statt eines einzigen relativ starken Pulses je Messwert eine Vielzahl von schwächeren Einzellichtpulsen ausgesandt, deren Empfangssignal für sich nicht notwendig ausreicht, um sich aus dem Hintergrundpegel herauszuheben. Die zugehörigen Empfangspulse, also das Empfangssignal in einem auf das Aussenden folgenden Zeitfenster, werden in einem Histogramm gesammelt. Aufgrund der Vielzahl von Ereignissen hebt sich das Nutzsignal aus dem zufälligen Störpegel heraus und kann somit wesentlich robuster detektiert werden.

Da sich die Lichtablenkeinheit 16a-b zwischen jeweils zwei Einzelpulsen weiterbewegt, muss jeweils einer Gruppe von Einzelpulsen, die ein Histogramm für einen Messwert bilden, eine gemeinsame Winkelrichtung zugewiesen werden. Bei einem ruhenden Laserscanner mit regelmäßiger Drehbewegung der Lichtablenkeinheit 16a-b werden dazu beispielsweise gleich große Gruppen gebildet, die jeweils ein Winkelsegment der gewünschten Winkelauflösung abdecken. Bei unregelmäßiger Drehbewegung besteht die Möglichkeit, die Gruppengrößen dynamisch anzupassen, so dass zwar die Anzahl der Einzelpulse variiert, die einem Messwert zugrunde liegen, nicht jedoch das Winkelsegment. Damit kann die Korrektureinheit 34 unter Ausnutzung der Informationen des Drehratensensors 32 durch Anpassung der Gruppengrößen die Winkelauflösung konstant halten.

## Patentansprüche

1. Sicherheitslaserscanner (10) zur Erfassung von Objekten in einem Überwachungsbereich (18) mit einem Lichtsender (12) zum Aussenden eines Sendelichtstrahls (14), einer drehbaren Ablenkeinheit (16) zur periodischen Ablenkung des Sendelichtstrahls (14) in den Überwachungsbereich (18), einem Lichtempfänger (24) zum Erzeugen eines Empfangssignals aus dem von Objekten in dem Überwachungsbereich (18) remittierten Lichtstrahl (20), einer Winkelmesseinheit (28) zur Bestimmung der Winkelposition der Ablenkeinheit (16) relativ zu dem Sicherheitslaserscanner (10), einem Drehratensensor (32) zur Bestimmung der Orientierung des Sicherheitslaserscanners (10) relativ zu seiner Umgebung sowie einer Auswertungseinheit (30), die anhand des Empfangssignals Messwerte erzeugt, die angeben, ob, in welcher Richtung und in welcher anhand der Lichtlaufzeit bestimmten Entfernung ein Objekt erfasst ist, wobei eine Korrektureinheit (34) vorgesehen ist, welche Orientierungsänderungen des Sicherheitslaserscanners (10) bezüglich der Drehachse der Ablenkeinheit (16) bestimmt und den Einfluss der Orientierungsänderungen auf die Messwerte kompensiert, wobei
der Sicherheitslaserscanner (10) eine Absicherungseinheit (36) und einen sicheren Ausgang (38) aufweist, dass die Absicherungseinheit (36) unzulässige Objekteingriffe in Schutzbereiche (102) innerhalb des Überwachungsbereichs (18) erkennt und daraufhin ein Absicherungssignal über den sicheren Ausgang (38) ausgibt und dass die Korrektureinheit (34) oder die Absicherungseinheit (36) prüft, ob die Messwerte nach Kompensation durch die Korrektureinheit (34) eine ausreichende Winkelauflösung aufweisen um eine sicherheitsrelevante Überwachungslücke zu verhindern; und andernfalls ein Abschaltsignal über den sicheren Ausgang (38) auszugibt

2. Sicherheitslaserscanner (10) nach Anspruch 1,
wobei die Korrektureinheit (34) dafür ausgebildet ist, die Drehbewegung der Ablenkeinheit (16) zu beschleunigen oder zu verlangsamen, insbesondere in Gegenrichtung der Orientierungsänderungen und in einem Maße entsprechend der Orientierungsänderungen.

3. Sicherheitslaserscanner (10) nach Anspruch 1 oder 2,
wobei die Korrektureinheit (34) dafür ausgebildet ist, aus der Winkelposition der Ablenkeinheit (16) relativ zu dem Sicherheitslaserscanner (10) und der Orientierung des Sicherheitslaserscanners (10) relativ zu der Umgebung die Winkelposition der Ablenkeinheit (16) relativ zu der Umgebung zu berechnen.

4. Sicherheitslaserscanner (10) nach Anspruch 3,
wobei die Korrektureinheit (34) dafür ausgebildet ist, die Zuordnung der Messwerte zu einer Richtung zu korrigieren, indem die Richtung aus der Winkelposition der Ablenkeinheit (16) relativ zu der Umgebung bestimmt wird.

5. Sicherheitslaserscanner (10) nach einem der vorhergehenden Ansprüche,
wobei die Auswertungseinheit (30) dafür ausgebildet ist, die Entfernung zu einem angetasteten Objekt aus der Lichtlaufzeit zwischen Aussenden des Sendelichtstrahls (14) und Empfangen des remittierten Lichtstrahls (20) zu bestimmen, so dass die Messwerte jeweils einen Objektabstand und eine Richtung umfassen.

6. Sicherheitslaserscanner (10) nach einem der vorhergehenden Ansprüche,
wobei der Sendelichtstrahl (14) eine Vielzahl aufeinanderfolgender Einzeilichtpulse aufweist und die Auswertungseinheit (30) dafür ausgebildet ist, jeweils für einen Messwert eine Gruppe von den ausgesandten Einzellichtpulsen entsprechenden Einzelempfangspulsen in einem zeitlichen Histogramm zu sammeln und aus dem Histogramm die Lichtlaufzeit vom Sicherheitslaserscanner (10) zu einem Objekt und daraus den Objektabstand zu bestimmen.

7. Sicherheitslaserscanner (10) nach Anspruch 6,
wobei die Auswertungseinheit (30) dafür ausgebildet ist, die Richtung des Messwerts aus den Winkelpositionen der Ablenkeinheit (16) bei Aussenden der Einzellichtpulse und/oder Empfangen der Einzelempfangspulse der in dem zugehörigen Histogramm gesammelten Gruppe zu bestimmen.

8. Sicherheitslaserscanner (10) nach Anspruch 6 oder 7,
wobei die Auswertungseinheit (30) dafür ausgebildet ist, die Gruppen derart zu wählen, dass die zu jeder Gruppe gehörigen Einzellichtpulse innerhalb eines einer vorgegebenen Winkelauflösung des Sicherheitslaserscanners (10) entsprechenden Winkelsegments ausgesandt werden, wobei das Winkelsegment relativ zu der Umgebung bestimmt ist.

9. Fahrzeug (100) mit einem Sicherheitslaserscanner (10) nach einem der vorhergehenden Ansprüche, insbesondere fahrerloses Transportsystem mit omnidirektionalem Antrieb, mit einer Navigationssteuerung, die dafür ausgebildet ist, die Bewegung des Fahrzeugs (100) anhand der Messwerte zu verändern und insbesondere das Fahrzeug (100) bei Empfang eines Absicherungssignals von dem Sicherheitslaserscanner (10) zu stoppen oder zu verlangsamen.

10. Fahrzeug (100) nach Anspruch 9,
wobei die Navigationssteuerung dafür ausgebildet ist, Bewegungen des Fahrzeugs (100) zu verlangsamen oder zu stoppen, um sicherzustellen, dass die Korrektureinheit (34) die Messwerte innerhalb einer geforderten Winkelauflösung kompensiert.

11. Verfahren zur Erfassung von Objekten in einem Überwachungsbereich (18) mit einem Sicherheitslaserscanner (10), bei dem ein Sendelichtstrahl (14) ausgesandt wird, periodisch den Überwachungsbereich (18) abtastet und ein Empfangssignal aus dem an Objekten in dem Überwachungsbereich (18) remittierten Lichtstrahl (20) erzeugt wird, wobei eine Winkelposition relativ zu dem Sicherheitslaserscanner (10), unter welcher der Sendelichtstrahl (14) ausgesandt wird, und eine Orientierung des Sicherheitslaserscanners (10) relativ zu dessen Umgebung bestimmt wird und wobei anhand des Empfangssignals Messwerte erzeugt werden, die angeben, ob, in welcher Richtung und in welcher anhand der Lichtlaufzeit bestimmten Entfernung ein Objekt erfasst ist, und wobei die Messwerte korrigiert werden, indem der Einfluss von Orientierungsänderungen des Sicherheitslaserscanner (10) relativ zu dessen Umgebung auf die Winkelposition, unter welchem der Sendelichtstrahl (14) ausgesandt wird, kompensiert wird,
**dadurch gekennzeichnet,**
**dass** unzulässige Objekteingriffe in Schutzbereiche (102) innerhalb des Überwachungsbereichs (18) erkannt werden und daraufhin ein Absicherungssignal über einen sicheren Ausgang (38) ausgegeben wird und dass geprüft wird, ob die Messwerte nach Kompensation durch die Korrektureinheit (34) eine ausreichende Winkelauflösung aufweisen, und andernfalls ein Abschaltsignal über den sicheren Ausgang (38) ausgegeben wird.

12. Verfahren nach Anspruch 11,
wobei die Abtastbewegung des Sendelichtstrahls (14) verändert wird, um die Orientierungsänderungen des Sicherheitslaserscanners (10) auszugleichen.

13. Verfahren nach Anspruch 11 oder 12,
wobei die Zuordnung der Messwerte zu einer Richtung aus sowohl der Winkelposition, unter welchem der Sendelichtstrahl (14) relativ zu dem Sicherheitslaserscanner (10) ausgesandt wird, als auch der Orientierung des Sicherheitslaserscanners (10) relativ zu dessen Umgebung bestimmt wird.

## Claims

1. A safety laser scanner (10) for detecting objects in a monitored zone (18) comprising a light transmitter (12) for transmitting a transmitted light beam (14), a rotatable deflection unit (16) for the periodic deflection of the transmitted light beam (14) into the monitored zone (18), a light receiver (24) for generating a received signal from the light beam (20) remitted by objects in the monitored zone (18), an angle measurement unit (28) for determining the angular position of the deflection unit (16) relative to the safety laser scanner (10), an angular rate sensor (32) for determining the orientation of the safety laser scanner (10) relative to its environment and comprising an evaluation unit (30) which generates measured values with reference to the received signal which indicate whether, in which direction and at which distance determined using the time of flight an object is detected, wherein a correction unit (34) is provided which determines orientation changes of the safety laser scanner (10) with respect to the axis of rotation of the deflection unit (16) and compensates the influence of the orientation changes on the measured values,
wherein the safety laser scanner (10) has a securing unit (36) and a secure output (38); wherein the securing unit (36) recognises unpermitted object intrusions into protected zones (102) within the monitored zone (18) and thereupon outputs a securing signal via the secure output (38); and wherein the correction unit (34) or the securing unit (36) checks whether the measured values have sufficient angular resolution after compensation by the correction unit (34) to prevent a safety-relevant monitoring gap and otherwise outputs a shut-down signal via the secure output (38).

2. A safety laser scanner (10) in accordance with claim 1,
wherein the correction unit (34) is configured to accelerate or to decelerate the rotary movement of the deflection unit (16), in particular in the counter-direction of the orientation changes and to a degree corresponding to the orientation changes.

3. A safety laser scanner (10) in accordance with claim 1 or claim 2,
wherein the correction unit (34) is configured to calculate the angular position of the deflection unit (16) relative to the environment from the angular position of the deflection unit (16) relative to the safety laser scanner (10) and from the orientation of the safety laser scanner (10) relative to the environment.

4. A safety laser scanner (10) in accordance with claim 3,
wherein the correction unit (34) is configured to correct the association of the measured values with a direction in that the direction is determined from the angular position of the deflection unit (16) relative to the environment.

5. A safety laser scanner (10) in accordance with any one of the preceding claims,
wherein the evaluation unit (30) is configured to determine the distance from a scanned object from the time of flight between the transmission of the transmitted light beam (14) and the reception of the remitted light beam (20) so that the measured values each comprise an object spacing and a direction.

6. A safety laser scanner (10) in accordance with any one of the preceding claims,
wherein the transmitted light beam (14) has a plurality of consecutive individual light pulses and the evaluation unit (30) is configured in each case to collect a group of individual received pulses corresponding to the transmitted individual light pulses for a measured value in a time-based histogram and to determine the time of flight from the safety laser scanner (10) to an object from the histogram and to determine the object spacing therefrom.

7. A safety laser scanner (10) in accordance with claim 6,
wherein the evaluation unit (30) is configured to determine the direction of the measured value from the angular positions of the deflection unit (16) on transmission of the individual light pulses and/or on reception of the individual received pulses of the group collected in the associated histogram.

8. A safety laser scanner (10) in accordance with claim 6 or claim 7,
wherein the evaluation unit (30) is configured to select the groups such that the individual light pulses belonging to each group are transmitted within an angular segment corresponding to a predefined angular resolution of the safety laser scanner (10), wherein the angular segment is determined relative to the environment.

9. A vehicle (100) having a safety laser scanner (10) in accordance with any one of the preceding claims, in particular a driverless transport system with an omnidirectional drive, having a navigation control which is configured to vary the movement of the vehicle (100) with reference to the measured values and in particular to stop or to decelerate the vehicle (100) on reception of a securing signal from the safety laser scanner (10).

10. A vehicle (100) in accordance with claim 9,
wherein the navigation control is configured to decelerate or to stop movements of the vehicle (100) to ensure that the correction unit (34) compensates the measured values within a demanded angular resolution.

11. A method of detecting objects in a monitored zone (18) comprising a safety laser scanner (10) in which a transmitted light beam (14) is transmitted and periodically scans the monitored zone (18) and a received signal is generated from the light beam (20) remitted at objects in the monitored zone (18), wherein an angular position relative to the safety laser scanner (10) at which angular position the transmitted light beam (14) is transmitted is determined and an orientation of the safety laser scanner (10) relative to its environment is determined and wherein measured values are generated with reference to the received signal which indicate whether, in which direction and at which distance determined using the time of flight an object is detected, and wherein the measured values are corrected in that the influence of orientation changes of the safety light scanner (10) relative to its environment on the angular position at which the transmitted light beam (14) is transmitted is compensated,
**characterised in that**
unpermitted object intrusions into protected zones (102) within the monitored zone (18) are recognised and thereupon a securing signal is output via the secure output (38); and **in that** a test is made whether the measured values have sufficient angular resolution after compensation by the correction unit (34) and otherwise a shut-down signal is output via the secure output (38).

12. A method in accordance with claim 11,
wherein the scanning movement of the transmitted light beam (14) is varied to compensate the orientation changes of the safety laser scanner (10).

13. A method in accordance with claim 11 or claim 12,
wherein the association of the measured values with a direction is determined both from the angular position at which the transmitted light beam (4) is transmitted relative to the safety light scanner (10) and from the orientation of the safety laser scanner (10) relative to its environment.

## Revendications

1. Scanner de sécurité à laser (10) pour la détection d'objets dans une zone de surveillance (18), comprenant un émetteur de lumière (12) pour émettre un rayon lumineux émis (14), une unité de déflexion rotative (16) pour défléchir périodiquement le rayon lumineux émis (14) vers la zone de surveillance (18), un récepteur de lumière (24) pour engendrer un signal de réception à partir du rayon lumineux (20) réémis par des objets dans la zone de surveillance (18), une unité de mesure angulaire (28) pour déterminer la position angulaire de l'unité de déflexion (16) par rapport au scanner de sécurité à laser (10), un capteur de vitesse de rotation (32) pour déterminer l'orientation du scanner de sécurité à laser (10) par rapport à son environnement, ainsi qu'une unité d'évaluation (30) qui, au moyen du signal de réception, engendre des valeurs de mesure qui indiquent si un objet est détecté, dans quelle direction et à quelle distance, en la déterminant au moyen du temps de parcours de la lumière, dans lequel il est prévu une unité de correction (34) qui détermine des modifications d'orientation du scanner de sécurité à laser (10) par rapport à l'axe de rotation de l'unité de déflexion (16) et qui compense l'influence des modifications d'orientation sur les valeurs de mesure,
dans lequel le scanner de sécurité à laser (10) comprend une unité de sécurisation (36) et une sortie sécurisée (38), de telle sorte que l'unité de sécurisation (36) reconnaît des interventions inadmissibles d'objets dans des zones protégées (102) à l'intérieur de la zone de surveillance (18) et délivre suite à cela un signal de sécurisation via la sortie sécurisée (38), et de telle sorte que l'unité de correction (34) ou l'unité de sécurisation (36) vérifie si les valeurs de mesures présentent, après compensation par l'unité de correction (34), une résolution angulaire suffisante pour empêcher une lacune de surveillance pertinente en termes de sécurité et dans le cas contraire, délivre un signal de coupure via la sortie sécurisée (38).

2. Scanner de sécurité à laser (10) selon la revendication 1,
dans lequel l'unité de correction (34) est réalisée pour accélérer ou pour ralentir le mouvement de rotation de l'unité de déflexion (16), en particulier en sens opposé aux modifications d'orientation et dans une mesure correspondant aux modifications d'orientation.

3. Scanner de sécurité à laser (10) selon la revendication 1 ou 2,
dans lequel l'unité de correction (34) est réalisée pour calculer, à partir de la position angulaire de l'unité de déflexion (16) par rapport au scanner de sécurité à laser (10) et à partir de l'orientation du scanner de sécurité à laser (10) par rapport à l'environnement, la position angulaire de l'unité de déflexion (16) par rapport à l'environnement.

4. Scanner de sécurité à laser (10) selon la revendication 3,
dans lequel l'unité de correction (34) est réalisée pour corriger l'association des valeurs de mesure à une direction, en déterminant la direction à partir de la position angulaire de l'unité de déflexion (16) par rapport à l'environnement.

5. Scanner de sécurité à laser (10) selon l'une des revendications précédentes,
dans lequel l'unité d'évaluation (30) est réalisée pour déterminer l'éloignement d'un objet appréhendé à partir du temps de parcours de la lumière entre l'émission du rayon de lumière émise (14) et la réception du rayon de lumière réémis (20), de telle sorte que les valeurs de mesure incluent respectivement une distance à l'objet et une direction.

6. Scanner de sécurité à laser (10) selon l'une des revendications précédentes,
dans lequel le rayon de lumière émise (14) comprend une pluralité d'impulsions de lumière individuelles successives, et l'unité d'évaluation (30) est réalisée pour collecter respectivement pour une valeur de mesure un groupe d'impulsions de réception individuelles correspondant aux impulsions de lumière individuelles émises dans un histogramme temporel, et pour déterminer à partir de l'histogramme le temps de parcours de la lumière depuis le scanner de sécurité à laser (10) jusqu'à un objet, et à partir de ce temps, pour déterminer la distance à l'objet.

7. Scanner de sécurité à laser (10) selon la revendication 6,
dans lequel l'unité d'évaluation (30) est réalisée pour déterminer la direction de la valeur de mesure à partir des positions angulaires de l'unité de déflexion (16) lors de l'émission des impulsions de lumière individuelles et/ou de la réception des impulsions de lumière individuelles du groupe collecté dans l'histogramme associé.

8. Scanner de sécurité à laser (10) selon la revendication 6 ou 7,
dans lequel l'unité d'évaluation (30) est réalisée pour sélectionner les groupes de telle façon que les impulsions de lumière individuelles appartenant à chaque groupe sont émises à l'intérieur d'un segment angulaire correspondant à une résolution angulaire prédéterminée du scanner de sécurité à laser (10), ledit segment angulaire étant déterminé par rapport à l'environnement.

9. Véhicule (100) comprenant un scanner de sécurité à laser (10) selon l'une des revendications précédentes, en particulier système de transport sans conducteur comprenant un entraînement omnidirectionnel, comprenant une commande de navigation, qui est réalisée pour modifier le mouvement du véhicule (100) au moyen des valeurs de mesure et en particulier pour arrêter ou ralentir le véhicule (100) lors de la réception d'un signal de sécurisation provenant du scanner de sécurité à laser (10).

10. Véhicule (100) selon la revendication 9,
dans lequel la commande de navigation est réalisée pour ralentir ou pour arrêter des mouvements du véhicule (100), afin de garantir que l'unité de correction (34) compense les valeurs de mesure à l'intérieur d'une résolution angulaire requise.

11. Procédé pour la détection d'objets dans une zone de surveillance (18) avec un scanner de sécurité à laser (10), dans lequel on émet un rayon de lumière émise (14), on palpe périodiquement la zone de surveillance (18) et on engendre un signal de réception à partir du rayon de lumière (20) réémis sur des objets dans la zone de surveillance (18), dans lequel on détermine une position angulaire par rapport au scanner de sécurité à laser (10), sous laquelle le rayon de lumière émise (14) est émis, et pour déterminer une orientation du scanner de sécurité à laser (10) par rapport à son environnement et dans lequel, au moyen du signal de réception on engendre des valeurs de mesure qui indiquent si un objet est détecté, dans quelle direction et à quel éloignement, que l'on détermine au moyen du temps de parcours de la lumière, et dans lequel on corrige les valeurs de mesure en compensant l'influence de modifications d'orientation du scanner de sécurité à laser (10) par rapport à son environnement sur la position angulaire sous laquelle le rayon de lumière émise (14) est émis, **caractérisé en ce que** l'on reconnaît des interventions inadmissibles d'objets dans des zones de protection (102) à l'intérieur de la zone de surveillance (18) et l'on délivre suite à cela un signal de sécurisation via une sortie sécurisée (38), et **en ce que** l'on vérifie si les valeurs de mesure présentent, après compensation par l'unité de correction (34), une résolution angulaire suffisante et, dans le cas contraire, on délivre un signal de coupure via la sortie sécurisée (38).

12. Procédé selon la revendication 11,
dans lequel le mouvement de palpage du rayon de lumière émise (14) est modifié afin de compenser les modifications d'orientation du scanner de sécurité à laser (10).

13. Procédé selon la revendication 11 ou 12,
dans lequel l'association des valeurs de mesure à une direction est déterminée à la fois à partir de la position angulaire sous laquelle le rayon de lumière émise (14) est émis par rapport au scanner de sécurité à laser (10) et à partir de l'orientation du scanner de sécurité à laser (10) par rapport à son environnement.
